# EUROPEAN PATENT APPLICATION

(11) **EP 4 530 901 A1**
(43) Date of publication of application: **02.04.2025**
(21) Application number: 24203109.4
(22) Date of filing: 27.09.2024
(51) Int. Cl.: G06F 21/57, G06F 8/65, G06F 21/64, G06N 20/00

(54) **PLATFORM RESILIENCY AUTHORITY**

(30) Priority: 27.09.2023 US 202363585683 P; 27.06.2024 US 202418756798
(71) Applicant: Nvidia Corporation, Santa Clara, CA 95051 (US)
(72) Inventor: PENNISI, Joseph Michael, Santa Clara, 95051 (US); STREMLAU, Thorsten Peter, Santa Clara, 95051 (US)
(74) Representative: Mathys & Squire

(57) **Abstract**

Systems and methods are directed toward a platform resiliency authority that may be used to identify a component capability to manage one or more update requests using on-component structures. When an update request is received, a component capability level may be determined and, if the component is unable to perform each of a protection, a detection, and a recovery operation on-component, additional update information may be identified and used to cause the update to be installed for the component.

## Description

### CROSS-REFERENCE TO RELATED APPLICATIONS

This application claims priority to and the benefit of U.S. Provisional Patent Application No. 63/585,683, filed September 27, 2023, which is incorporated by reference herein in its entirety.

### TECHNICAL FIELD

At least one embodiment pertains to managing and monitoring security in a hardware platform based on component capabilities for protecting, detecting, and recovering firmware.

### BACKGROUND

Computing devices may be formed from a variety of different components that may be produced by different manufacturers. Some or all of these components may contain firmware that is fundamental to the operation of the component, including parameters or features that can be updated at a later time, for example, updates that may be associated with the components and/or transmitted from a remote location. Based on the complexity of the device, each device may be classified by its ability to protect, detect, and recover its firmware and critical parameters and data from malicious attacks and/or unintentional changes or corruption. Often devices are not designed with each of these capabilities, and thus they are not able to perform the tasks necessary to prevent issues related to exploiting potential security vulnerabilities, functional issues, and/or compatibility issues.

### SUMMARY

The invention is defined by the claims. In order to illustrate the invention, aspects and embodiments which may or may not fall within the scope of the claims are described herein.

Systems and methods are directed toward a platform resiliency authority that may be used to identify a component capability to manage one or more update requests using on-component structures. When an update request is received, a component capability level may be determined and, if the component is unable to perform each of a protection, a detection, and a recovery operation on-component, additional update information may be identified and used to cause the update to be installed for the component.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Various embodiments in accordance with the present disclosure will be described with reference to the drawings, in which:
FIGS. 1A and 1B illustrate schematic diagrams of computing devices including a platform and software, in accordance with at least one embodiment;
FIG. 2A illustrates a schematic representation of a device capability hierarchy, in accordance with at least one embodiment;
FIG. 2B illustrates a schematic representation of a device capabilities with respect to protect, detect, and recovery operations, in accordance with at least one embodiment;
FIG. 3 illustrates an example environment for a platform resiliency authority, in accordance with at least one embodiment;
FIG. 4 illustrates a schematic representation of a platform resiliency authority, in accordance with at least one embodiment;
FIG. 5A illustrates an example process for executing a firmware update using a platform resiliency authority, in accordance with at least one embodiment;
FIG. 5B illustrates an example process for establishing a platform resiliency authority, in accordance with at least one embodiment;
FIG. 5C illustrates an example process for executing a correction action responsive to a platform component error, in accordance with at least one embodiment;
FIG. 6 illustrates components of a distributed system that can be utilized to update or perform inferencing using a machine learning model, according to at least one embodiment;
FIG. 7 illustrates an example data center system, according to at least one embodiment;
FIG. 8 illustrates a computer system, according to at least one embodiment;
FIG. 9 illustrates a computer system, according to at least one embodiment;
FIG. 10 illustrates at least portions of a graphics processor, according to one or more embodiments; and
FIG. 11 illustrates at least portions of a graphics processor, according to one or more embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

The systems and methods described herein may be used by, without limitation, non-autonomous vehicles, semi-autonomous vehicles (*e.g*., in one or more advanced driver assistance systems (ADAS)), piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, trains, underwater craft, remotely operated vehicles such as drones, and/or other vehicle types. Further, the systems and methods described herein may be used for a variety of purposes, by way of example and without limitation, for machine control, machine locomotion, machine driving, synthetic data generation, model training or updating, perception, augmented reality, virtual reality, mixed reality, robotics, security and surveillance, simulation and digital twinning, autonomous or semi-autonomous machine applications, deep learning, environment simulation, object or actor simulation and/or digital twinning, data center processing, conversational artificial intelligence (AI), generative AI with large language models (LLMs), light transport simulation (*e.g*., ray-tracing, path tracing, etc.), collaborative content creation for 3D assets, cloud computing and/or any other suitable applications.

Disclosed embodiments may be comprised in a variety of different systems such as automotive systems (*e.g*., a control system for an autonomous or semi-autonomous machine, a perception system for an autonomous or semi-autonomous machine), systems implemented using a robot, aerial systems, medial systems, boating systems, smart area monitoring systems, systems for performing deep learning operations, systems for performing simulation operations, systems for performing digital twin operations, systems implemented using an edge device, systems incorporating one or more virtual machines (VMs), systems for performing synthetic data generation operations, systems implemented at least partially in a data center, systems for performing conversational AI operations, systems for performing generative AI operations using LLMs, systems for performing light transport simulation, systems for performing collaborative content creation for 3D assets, systems implemented at least partially using cloud computing resources, and/or other types of systems.

Approaches in accordance with various embodiments can be used to provide a resiliency authority for managing and monitoring security in a hardware (HW) platform. This central authority may be implemented to detect, protect, and recover from security threats and vulnerabilities to reduce risks of device compromise or data breaches. Various embodiments deploy a local HW platform resiliency authority to ensure that a hardware platform is secure, resilient, and able to withstand a variety of security threats. Systems and methods may be used to manage firmware (FW) for a variety of sub-components forming a HW system, which may include components that have different capabilities, from fully dependent (e.g., missing basic security capabilities) to fully sufficient (e.g., on-chip or on-component security capabilities). Various embodiments may provide platform resiliency that complies with certain standards organizations, such as but not limited to, NIST SP800-193. Moreover, systems and methods enable tracking, addressing, and managing of different types of FW for different components associated with a platform.

In at least one embodiment, systems and methods address FW management for a variety of intelligent components (e.g., components that include firmware) used to form a platform, which may be comprised of one or more devices assembled and working together to deliver a specific computing function, but does not include other software other than the FW that is part of the devices in the platform. In other words, the platform is comprised of HW and FW necessary to boot the system to a point at which software, or an operating system, can be loaded. By way of non-limiting example, platforms may refer to computing devices such as notebook computers, desktop computers, servers, network slides, blades, wearable devices, automobiles, personal mobility devices, appliances, and/or the like. Furthermore, various devices may include multiple different platforms. The FW on the individual components of the platform needs to be protected to ensure remote confidentiality, integrity, and availability, as well as local confidentiality and integrity. However, different components may have different protection capabilities, which may be based and/or determined by a supplier of the component, a cost of the component, a function of the component, and/or combinations thereof. For example, some components may be fully sufficient, while others are partially sufficient, and still others may be fully dependent. Furthermore, certain components may not have persistent FW storage and therefore rely on other entities to provide this FW for them. In at least one embodiment, some devices may lack capabilities to store and/or persist their own FW, even if they include capabilities to persist critical parameters or data. Systems and methods of the present disclosure provide a security authority to manage the FW for each of these types of components, regardless of their capabilities, and to provide a status by, in at least one embodiment, indexing each component, associated update keys for components, detect keys, recovery keys, and locations for the individual components. In at least one embodiment, the platform resiliency authority is used to establish a status of the components for a platform and then execute one or more workflows responsive to updating FW for the component.

Various embodiments of the present disclosure may provide improvements in both supply-chain security and to platform security, among various other benefits. Moreover, embodiments may provide one or more solutions to comply with one or more industry standards, including but not limited to NIST 800-193, by implementing systems and methods for improved protection, detection, and recovery. For example, systems and methods may be used to manage and implement secure updates, authenticate updates, and version control to roll back components if one or more errors arise. Additionally, various embodiments may be deployed at other times, not just during updates, to authenticate FW. In at least one embodiment, component capabilities are tracked and monitored and, when an update request is received, a workflow is initiated based, at least in part, on the capabilities of the component receiving the update. For example, a fully sufficient component may be capable of receiving the update itself, verifying the authenticity of the update through means such as, but not limited to, a digital signature, applying that update if verified authentic, measuring and validating the firmware when run, and may also include its own recovery storage. A partially sufficient component, on the other hand, may be able to receive and verify the update, but then may require off-device recovery storage. Other components may have still differing capabilities, and systems and methods may use that information in order to establish different workflows for updates based, at least in part, on the capabilities. It should be appreciated that while embodiments may describe certain operations as being performed responsive to update requests, systems and methods of the present disclosure are not limited to updates. That is, embodiments of the present disclosure can be implemented to measure and validate any of the FW in the system at any time, and not only when there is an update. Furthermore, while authentication may be described with reference to signatures, embodiments of the present disclosure are not limited to such authentication processes and may include various other measurement techniques that can be used for authentication and/or validation, including but not limited to hashing, cryptography (e.g., public and/or private keys), challenge-response authentication, and/or the like.

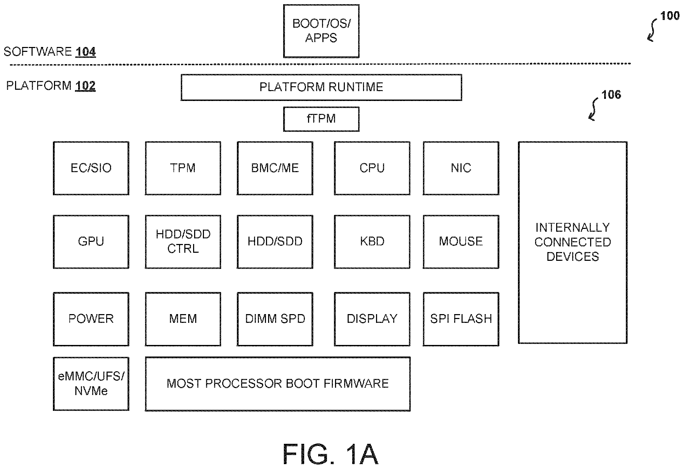

FIG. 1A illustrates a schematic representation of a system 100 that includes a platform 102 and software 104. In this example, the platform 102 includes a variety of different components and/or sub-components 106. It should be appreciated that the components 106 shown in FIG. 1A are by way of non-limiting example and are not intended to limit or otherwise restrict the present disclosure because there could be more, fewer, or different components that may be selected based, at least in part, on capabilities of the device associated with the platform. This example includes certain components, such as an embedded controller (EC)/super input/output (SIO) that may be associated with different mobile platforms (for the EC) or with desk-based platforms (for the SIO). These controllers typically control functions of the platform and may be the first system board device in the platform to execute code. The trusted platform module (TPM) may include a security coprocessor capable of securely storing and using cryptographic keys and measurements. The TPM may also contain non-volatile memory storage that persistently stores critical data. Various embodiments may also include a baseboard management controller (BMC)/management engine (ME) associated with server and/or client platforms to serve as an out-of-band management device to enable platform administrators to manage a platform without requiring the host operating system to be running. Also shown are a host processor, such as a central processing unit (CPU) and a network interface controller (NIC). The NIC may enable connectivity to other devices and may include Read-Only Memory (ROM) FW that is loaded during boot and executed by the host processor. A graphics processing unit (GPU) is also illustrated in this example along with a hard disk drive (HDD), solid state drive (SDD), keyboard, mouse, power supply, memory, host controller for storage devices, a serial peripheral interface (SPI) flash, embedded multimedia card (eMMC)/universal flash storage (UFS)/non-volatile memory express (NVMe), boot FW, and internally connected devices, such as webcams, fingerprint scanners, and the like. As noted, various other components such as fans and the like may also be included within embodiments of the present disclosure.

Executing after boot is the software 104 that may use the underlying components of the platform 102 to complete one or more tasks. As will be appreciated, the various FW associated with the underlying components 106 may be initialized, validated, and then started prior to execution of any software 104, such as operating systems. In the event of a security breach or a failure, the boot operations may fail, thereby stalling or otherwise prevent execution of the software 104 and one or more associated operations of the device. By way of example, if a malicious actor is able to corrupt one or more of the components 106, for example by having it install and load a non-operable FW version, then the remaining components may be "stuck" or otherwise unable to boot, at least without further intervention. The likelihood of different components 106 receiving or otherwise using this malicious code increases as the capabilities of the components 106 decreases. Systems and methods of the present disclosure address this problem, among others, by tracking and monitoring component capabilities and then initializing updates or other FW changes based on the different capabilities in order to provide enhanced security and monitoring for the components 106 that most require the assistance.

As noted here, various embodiments of the present disclosure are directed toward a platform security authority that may be used to index, track, and then facilitate updates for a variety of different components that form the platform, even when the components may be supplied by different manufacturers and have different capabilities. Embodiments may index or otherwise determine capabilities for different components forming the platform and then, responsive to an update request, determine whether one or more interventions or supplemental assistance is required to improve confidentiality, integrity, and availability for the component.

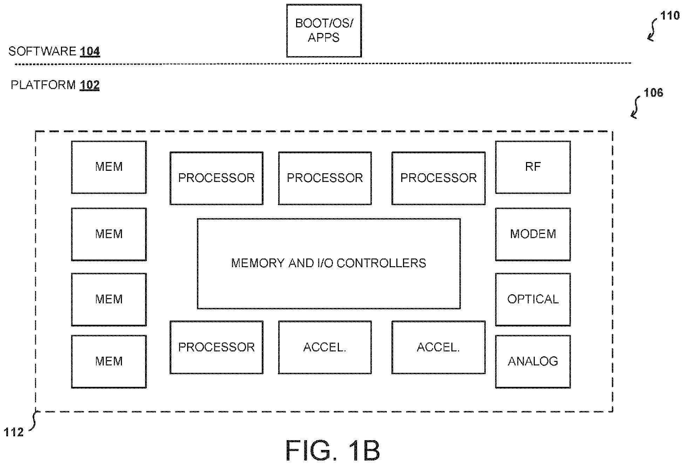

FIG. 1B illustrates a schematic representation of a system 110 that includes a platform 102 and software 104. In this example, systems and methods are illustrated in accordance with operation on devices such as multi-chip modules, chiplets, and/or dielet packages. In this example, the system 110 includes a chip package 112 that may include various components 106. As noted herein, various embodiments may include more or fewer components than those shown, and certain components have been removed for clarity and ease of discussion. In this example, the components include a number of memory devices, multiple processors (e.g., CPUs, GPUs, DPUs, etc.), memory and input/output controllers, accelerators, and supporting components such as RF devices, modems, optical devices, and analog devices.

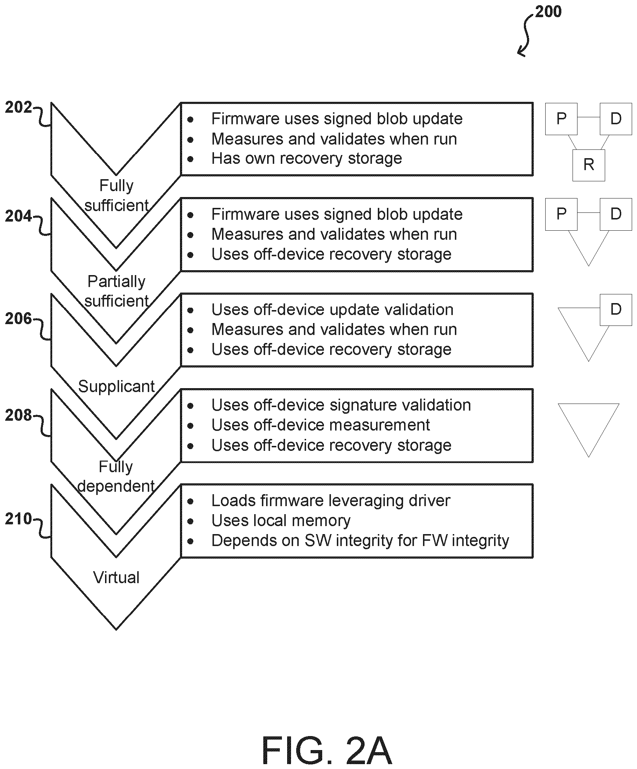

FIG. 2A is a schematic representation 200 of component capability classification that may be used with embodiments of the present disclosure. In this example, there are five different levels or tiers of classification, but it should be appreciated that more or fewer levels of classification may be defined and/or used. A first level 202 (e.g., first tier) is referred to as being "fully sufficient," a second level 204 (e.g., second tier) is referred to as being "partially sufficient," a third level 206 (e.g., third tier) is referred to as being "supplicant," a fourth level 208 (e.g., fourth tier) is referred to as being "fully dependent," and a fifth level 210 (e.g. fifth tier) is referred to as being "virtual." As noted, these labels are for illustrative purposes only and for ease with the present discussion. Each of the different levels 202-210 includes different properties or parameters associated with protection (e.g., protect), detection (e.g., detect), and recovery (e.g., recover), which are indicated as "P," "D,", and "R," respectively. In one or more embodiments, protection may refer to ensuring FW updates are performed securely, such as by validating a digital signature to ensure authenticity. If that succeeds, then the current FW is replaced with the updated FW. In one or more embodiments, detection may refer to ensuring that the current FW that the component is about to execute can be validated before being executed. This may be performed through use of a digital signature or some other secure measurement, as noted herein. If the validation fails, this code will not be executed, and then the recovery process may take over to try to get the component back to a valid operational state. In one or more embodiments, recovery refers to replacing invalid (e.g., unable to be authenticated) code with a valid backed up version, to restore the component to a valid operational state.

In at least one embodiment, protection may refer to a component's ability to receive and validate as authentic a secure update, detection may refer to a component's ability to validate current FW is authentic, and recovery may refer to a component's ability to roll back to revert to prior versions if there is an error or if current FW is unable to be authenticated. For example, a component may attempt to authenticate the current FW (e.g., detect) and find it has been maliciously or inadvertently corrupted and does not pass authentication. In this scenario, the component may then recovery using a backup version of the FW. While each component may have capabilities for satisfying each of P, D, and R, systems and methods may be directed toward on-component capabilities for each of P, D, and R, where a device is deemed to be able to accomplish a task if it can do so on-device and may be deemed to not accomplish a task if off-device intervention or assistance is necessary.

In this example, the first level 202 includes capabilities that satisfy each of P, D, and R due to the ability of the fully sufficient component to receive signed blob updates for FW, to measure and validate the FW when run, and also by including on-board recovery storage. Such a component may not need any further assistance or functionality provided by the resiliency authority, but in various embodiments, the presence of the component considered at the first level 202 may still be tracked for completeness and to provide knowledge of the full platform. In other words, the "fully sufficient devices" of the first level 202 may refer to devices that have the ability to implement all necessary capabilities internally, providing their own protection, detection, and recovery functions. As described in at least one example embodiment herein, an index may log and track components associated with the first level 202, but various cells or associated values may be considered "blank" or not be populated because off-device components may not be necessary to accomplish various tasks.

The second level 204 may include some of the same capabilities as the first level 202, such as the signed blob and the measure and validation, but in this example, the second level component does not include on-board recovery storage, and instead, may need assistance from an off-device recovery storage service. As will be described herein, systems and methods of the present disclosure may identify this missing piece (e.g., the recovery piece) and provide assistance or access to different recovery options that may be secured or otherwise verified. For example, various embodiments may track and index components associated with the second level 204 and then store secured locations associated with recovery operations for use in a workflow associated with a FW update and/or a current FW authentication. In operation, the second level 204 will need to recover in the event the FW does not authenticate, but if there is a FW update, the resiliency engine may need to update the recovery image in the event the FW update succeeds so that it has the latest FW version available for recovery. As noted herein, recovery may be done in multiple ways, such as, but not limited to, directly working with the partially sufficient component, or with the authority providing the FW update to the component. In at least one embodiment, the "partially sufficient devices" of the second level 204 may refer to devices that have protection and detection capabilities, but require an external source to provide recovery capabilities.

The third level 206 may also include certain features of the first and second levels 202, 204, such as measuring and validating when run, but in this example off-device validation is used along with off-device recovery storage. As a result, the third level 206 is missing both the protect and recovery portions sought after with embodiments of the present disclosure. By identifying these portions that are lacking, systems and methods may be implemented to provide further protection and resiliency to third level components. For example, an index may provide information for recovery storage and also implement the EC for protection features. In at least one embodiment, the "supplicant devices" of the third level 206 may refer to devices that have detection capabilities, but rely on an external source to provide protection and recovery functions.

The fourth level 208 is illustrated as lacking each of the protection, detection, and recovery portions by using off-device validation, off-device measurement, and also off-device recovery storage. Similarly, the fifth level 210 also lacks the desired measures by including driver-loaded FW, local memory, and relying on software, such as an operating system, to verify FW integrity. Systems and methods may be used to provide additional features by identifying components that are fourth and fifth levels 208, 210 components and implementing enhanced security features. In other words, the "fully dependent devices" of the fourth level 208 may refer to devices that do not have any internal capabilities and rely entirely on external sources to provide protection, detection, and recovery functions. Additionally, the "virtual devices" of the fifth level 210 may refer to software-based devices that have the ability to provide their own detection capabilities, but rely on software, such as a driver in the operating system, to provide protection and recovery capabilities. These devices may include devices without local persistent storage for maintaining their FW so that the FW is loaded from another location based on software, such as the device driver within the OS. These devices may or may not have their own detection capabilities and may require assistance from the resiliency engine to help provide this if needed. Protection and Recovery services, based on the nature of how these FW images are delivered, may fall to the driver in the OS to provide and are managed as the OS driver software is managed. References to the OS are by way of example and, as noted herein, various embodiments may refer to the fifth level 210 devices as being associated with software and not necessarily only an OS. For example, a software application executing on the OS may be used for one or more of P, D, and R.

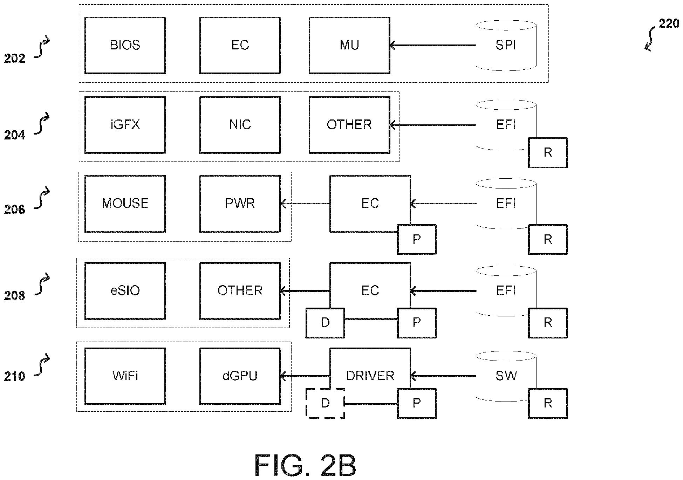

FIG. 2B illustrates a schematic representation 220 for a variety of components 106 having different levels 202-210 of capabilities that may be used with embodiments of the present disclosure. In this example, different components are shown grouped into the different respective levels or tiers 202-210. For example, the first level 202 includes the BIOS, the embedded controller (EC), and the management unit (MU). Moreover, flash memory (e.g., persistent storage for FW) may be used to host FW or other information. As a result, these components may be configured to manage and support their own detection, protection, and recovery capabilities.

As noted herein, the additional levels 204-210 may have lesser capabilities than the first level 202. For example, the second level 204 may include components such as integrated graphics (iGFX), the NIC, and various others that rely on external storage, such as via an extensible firmware interface (EFI) partition on a system storage device in order to provide recovery capabilities. Similarly, the third level 206 may include components such as the mouse or the power supply and also require the EFI storage partition for recovery capabilities. However, as noted here, the third level 206 may also lack the ability to manage its own protection capabilities, and as a result, the EC may be used to provide this functionality. This configuration is also shown in the fourth level 208, which may include components such as an electronic SIO (eSIO) or others, and now also integrates the detection capabilities into the EC. Similarly, the fifth level 210 also lacks the capabilities for protection and recovery and may use drivers associated with the software (SW), such as an operating system or various other software applications to facilitate such functionality. However, as noted herein, various embodiments may include fifth level devices that may or may not have detection capabilities. For example, WiFi and dGPU may have detection capabilities in certain embodiments, but other types may not. Accordingly, the device may provide the detection capability in certain embodiments associated with the fifth level 210 and the resiliency engine may provide the detection capabilities in certain embodiments associated with the fifth level 210.

Embodiments of the present disclosure may identify the various capabilities of the components in order to track how to implement various upgrades, including which components are capable of handling which operation and/or which components require additional security and assistance. In this manner, systems and methods of the present disclosure provide a central authority to manage FW resiliency across each component of a platform, independent of an integrated FW resiliency capability.

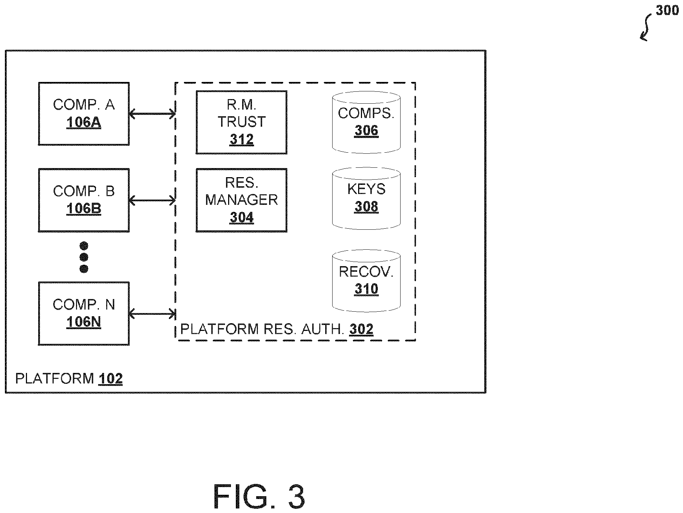

FIG. 3 illustrates an example environment 300 that may be used with embodiments of the present disclosure. In this example, the platform 102 is illustrated including a number of different components 106A-106N. As noted herein, the components may be individual devices that are grouped together to provide functionality for the platform 102. The components 106A-106N may have different tiers of capabilities with respect to detection, protection, and recovery operations. Systems and methods of the present disclosure may include a platform resiliency authority 302, which may execute on a component of the platform, such as a system on chip (SoC) or the EC, to record and manage, and in one or more embodiments determine capabilities for various components 106A-106N and/or to manage component capabilities to facilitate update, execution, and recovery operations. For example, the platform resiliency authority 302 may leverage prior knowledge from the system designer, having selected the components within the platform 102, to know what capabilities these components have and therefore how the resiliency engine would need to manage each. In this example, a resiliency manager 304 may manage incoming requests and/or outgoing messages. For example, the resiliency manager 304 may receive information from different components 106A-106N regarding a FW update, as one option and various other embodiments may be directed to authenticating existing FW and/or other operations. As another example, in at least one embodiment, the resiliency manager 304 may query one or more components 106A-106N to determine information associated with the individual capabilities of the components 106A-106N, such as determining a tier associated with the components 106A-106N. For example, one or more components 106A-106N may be removable or upgradeable with respect to the platform 102, and when a new component is installed, the resiliency manager 304 may transmit a request for information to the newly installed component regarding its capabilities, and as noted herein, may then update one or more index or datastores responsive to information from the new component.

In at least one embodiment, a component datastore 306 may be maintained by the platform resiliency authority 302 to identify components 106A-106N forming the platform 102 and their associated capabilities. For example, a "type" may be assigned to a given component associated with the component's level or classification. Additionally, the component datastore 306 may also index or otherwise track different components 106A-106N to allow for cross-reference across a variety of different types of information and/or values. For example, different keys (e.g., update keys, detect keys, etc.) may be stored in key datastore 308 and recovery image locations may be stored in a recovery datastore 310. As noted herein, these datastores 306-310 are provided by way of non-limiting example and there may be more or fewer datastores. For example, all information may be stored in a single datastore. As another example, there may be additional datastores that are classified by level and/or by capability, location, and the like.

In operation, the component datastore 306 may be pre-populated based on information associated with a developer for the platform 102. For example, the developer may know each component 106A-106N being added to the platform 102, its associated capabilities, and the like. Therefore, the component datastore 306 may be populated with the known information when the platform 102 is built. Later, if changes are made (e.g., components are added), then systems and methods may be implemented to permit the resiliency manager 304 to update or revise the component datastore 306. For example, upon installation of a new component, such as upgrading a hard drive, the resiliency manager 304 may query the new component to obtain information and/or a user may update the component datastore 306, among other options. In at least one embodiment, upon receipt of a FW update request, the resiliency manager 304 may query the component datastore 306 to determine which component is associated with the update and the component capabilities, and if necessary, identify locations in the various datastore 308, 310 to obtain information to facilitate the update. As another example, when a new component is installed, model or identifying information may be obtained by the platform 102 and then the resiliency manager 304 may query a remote datastore that may include information regarding capabilities of different components and, finding a matching component, may then update the various datastores 306-310. In this manner, as new components are developed, the platform developer may continuously update a remote index to permit the platform 102 to continuously update and manage different upgrades.

In at least one embodiment, systems and methods may deploy one or more techniques or applications to prevent subversion of the platform resiliency authority 302. For example, the platform resiliency authority 302 may have its own rooted trust 312. The rooted trust 312 may own or otherwise control update rights for different applications associated with the platform 102. In at least one embodiment, the rooted trust 312 may be populated by an authority (e.g., a platform owner) during manufacturing and/or assembly. As one non-limiting example, if the platform 102 was a personal computer, the computer manufacturer would populate and control the rooted trust 312 by including information associated with the components 106A-106N installed within the personal computer. Additionally, the computer manufacturer would also add other components that were known to be compatible or that could be included, such as different types of memory, different peripheral devices, and/or the like.

However, in at least one embodiment, building in a pre-set list may not provide sufficient flexibility to change and/or modify the platform 102. For example, it may be desirable to change out components 106A-106N and/or add new components. Over time, even if the manufacturer were to include additional options within the rooted trust 312, those would likely fail to capture components that were manufactured even a short time in the future. Accordingly, systems and methods may implement one or more dynamic updates to the rooted trust 312. For example, the manufacturer could provide updated authorized lists, such as lists of new components 106A-106N along with associated keys and/or the like for those components. Additionally, when a new component is added, one or more connections may be established to the manufacturer to verify the new component and then securely update the rooted trust 312 for the platform resiliency authority 302. Similarly, one or more embodiments may also be used to update the existing rooted trust 312 and/or change stored keys and the like. For example, if it were discovered that an authorized update was compromised, one or more authorities may be used to update the rooted trust 312. In this manner, the platform 102 may be updated and/or modified while maintaining the security provided by the platform resiliency authority 302. In at least one embodiment, the manufacturer may be the authority associated with updates. However, in other examples, the authority may include the platform owner, an enterprise supporting the platform, and/or combinations thereof.

In
at least one embodiment, systems and methods may provide a resilience engine that would include or incorporate a rooted trust of itself. For example, an authority may be used to "own" or "control" or otherwise uprights rights for the engine. As one example, FW within a device may be controlled by the device manufacturer, and as a result, FW updates are issued only by the device manufacturer. Systems and methods may include one or more authorities associated with the resilience engine to manage and provide updates associated with different components. The one or more authorities may identify a particular component that may be added to the platform and provide associated information about the component, which may enable the resilience engine to add the component to the list of components associated with the platform. As discussed herein, while the initial build of the platform 102 may populate the associated components, it may be desirable to add additional devices or capabilities, such as plugin devices or the like. For example, the platform 102 may include one or more ports that enable connections to different external components that may be used to execute different operations, such as an external graphics processor or memory device. Systems and methods may enable these external devices to be added to the resilience engine, thereby permitting the resilience engine to subsume responsibility for the additional device(s) that may now be part of the platform 102, but that were not part of the platform when originally shipped and/or manufactured.

As discussed herein, various different authorities may be deployed to "own" or "control" the resilience engine, and in certain embodiments, different levels or control may be implemented. For example, a first authority may have more control over critical underlying hardware while a second has control over peripheral devices. Moreover, embodiments of the present disclosure may be used to securely update and/or modify the resilience engine. As one example, an authority, such as a platform manager, may be the only entity permitted to modify and/or update the resilience engine. For example, there could be a prestored set of keys or the like to permit updates from a particular authority. However, in another example, one or more additional or alternative authorities may update the resilience engine. In at least one embodiment, a new component could be added and/or an existing key or other credential could be changed, for example responsive to a security update, such as a key leak or other incident. As a result, future updates will be provided with and/or use the updated key, thereby permitting rapid updates and dynamic changes to the resilience engine. Furthermore, it should be appreciated that an authority may transfer control at different times. For example, upon shipping the platform, the manufacturer may transmit control over to a purchaser or owner and allow the purchaser or owner to internally manage and control the resilience engine.

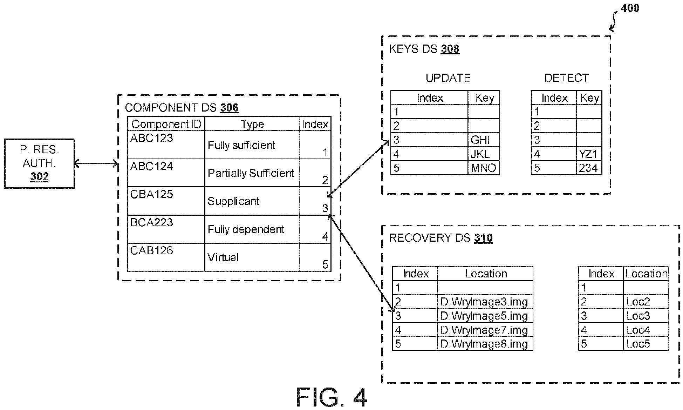

FIG. 4 illustrates an example environment 400 that may be used with embodiments of the present disclosure. In this example, the platform resilience authority 302 may query one or more datastores, such as the component datastore 306, in order to identify capabilities for given components of the platform. In this example, the component datastore 306 may maintain an index for the individual components, which here includes component identifications, a type or classification, as well as an index. Based on the type/classification of the component, different information may be stored in other datastores 308, 310. For example, because the component identified as ABC123 is a "fully sufficient" or first level component, there are no entries in the keys datastore 308 or the recovery datastore 310 because, as a first level component, the component ABC123 can manage full functionality within the component itself and does not need assistance or supplemental help. In contrast, the component identified as CBA125 is a "supplicant" or third level component and therefore lacks both protect and recover capabilities. As a result, the index associated with the component CBA125 includes an entry associated with an update key and a recovery location, but does not include a detect key because, as a third level component, the component CBA125 is capable of such functionality on its own. The information acquired from the datastores 306-310 may then be used to implement the requested update. Accordingly, systems and methods may track and maintain component functionality such that, upon receipt of different update requests, the platform resiliency authority 302 can determine the appropriate keys and recovery locations to implement updates within a secure environment.

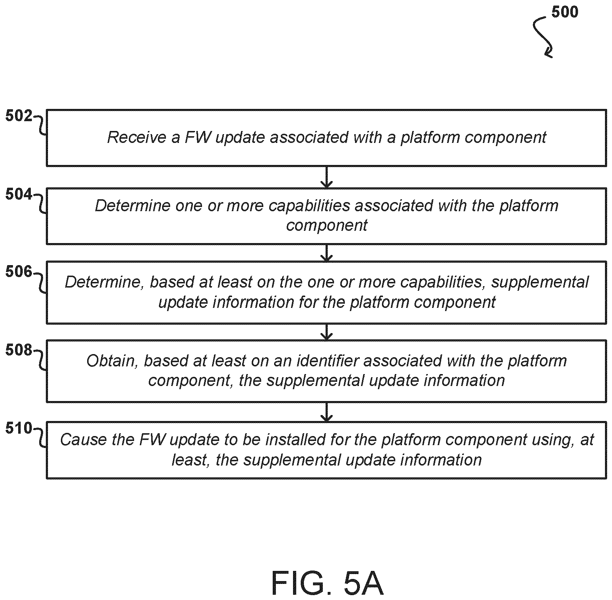

FIG. 5A illustrates an example process 500 that can be used to implement a FW update based on a component capability. It should be understood that for this and other processes presented herein that there may be additional, fewer, or alternative operations performed in similar or alternative orders, or at least partially in parallel, within the scope of the various embodiments unless otherwise specifically stated. Further, while this example refers to ports, it should be understood that various other components may also use such a process within the scope of various embodiments. In this example, a FW update for a platform component is received 502. The update may be associated with a component forming a portion of the platform in which the component has one of a variety of different tiers or capabilities with respect to protection, detection, and recovery operations. In this example, one or more capabilities of the component are determined 504. For example, it may be determined whether or not the component is "fully sufficient" or "partially sufficient," among various other options. Information regarding the capabilities may be stored in one or more datastores. Supplemental update information may then be determined based, at least, on the one or more capabilities of the component 506. For example, if the component is determined to be a "partially sufficient" component, supplemental update information may include a location of a recovery image, among various other options, as discussed herein. The supplemental update information may then be obtained 508 and used to cause the FW update to be installed 510. In this manner, FW updates may be performed with improved security because components that are less than fully sufficient may receive additional support from other platform components in order to implement various updates.

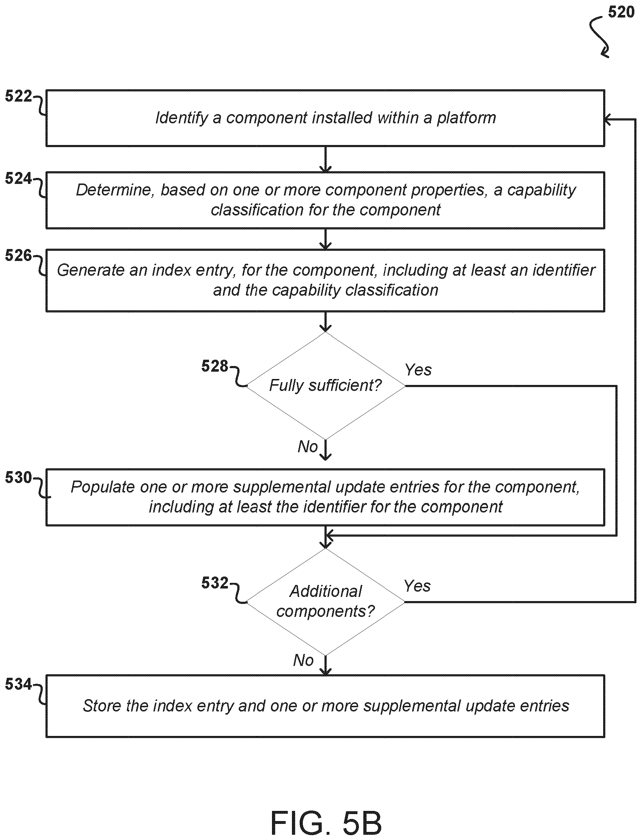

FIG. 5B illustrates an example process 520 for generating an index associated with component capabilities. In this example, a component forming a platform is identified 522. A capability classification for the component is determined based, at least, on one or more component properties 524. The component may then be stored within an index of components forming the platform, where the index may include an identification for the component and at least the capability classification 526. It may be determined whether the component is categorized as a fully sufficient component 528. If not, then one or more supplemental update entries may be populated 530. For example, different keys or recovery storage locations may be added for components that are not fully sufficient. If the component is fully sufficient, then the process may proceed to determining whether or not additional components for the platform are present 532. If so, then the process may be repeated to identify different capabilities and fill out the index. If not, then the index entries and the one or more supplemental update entries may be stored 534.

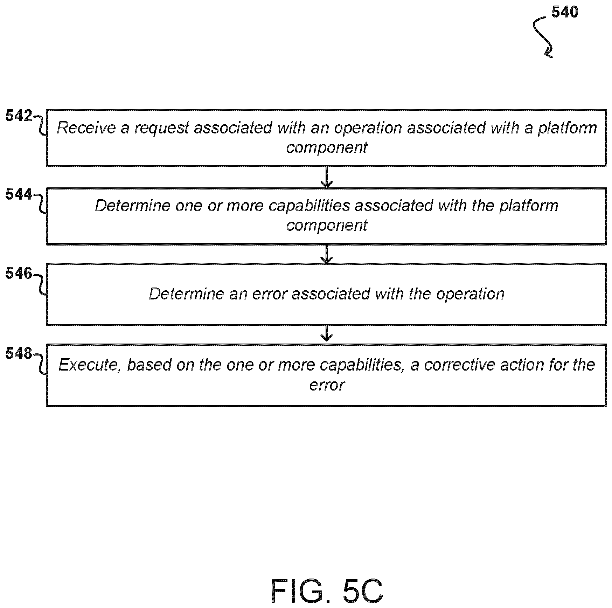

FIG. 5C illustrates an example process 540 for generating executing a corrective action responsive to an error. In this example, a request is received associated with an operation of a platform component 542. As one example, the operation may be a FW operation. For example, the component may be providing an indication that a FW version will be validated. Additionally, the FW operation may be directed toward a failure to run, a recovery operation, and/or the like. One or more capabilities for the platform component may be determined 544. The capabilities may be associated with a level or tier of capabilities that can be performed on-platform component, such as a fully-sufficient component or a supplicant component, among other options. An error associated with the operation may be determined 546, such as an inability to validate the FW version, an update error, a recovery error, a failure to run, and/or the like. In at least one embodiment, where the platform component does not have sufficient capabilities to recover from the error, as one option, a corrective action for the error may be executed 548. For example, a backup version of the FW may be provided to the component. In another example, where the error is associated with the component's inability to perform authentication, the corrective action may be to authenticate the FW version. In this manner, a platform resiliency authority may be provide assistance to platform components based on their on-device capabilities.

As discussed, aspects of various approaches presented herein can be lightweight enough to execute on a device such as a client device, such as a personal computer or gaming console, in real time. Such processing can be performed on, or for, content that is generated on, or received by, that client device or received from an external source, such as streaming data or other content received over at least one network. In some instances, the processing and/or determination of this content may be performed by one of these other devices, systems, or entities, then provided to the client device (or another such recipient) for presentation or another such use.

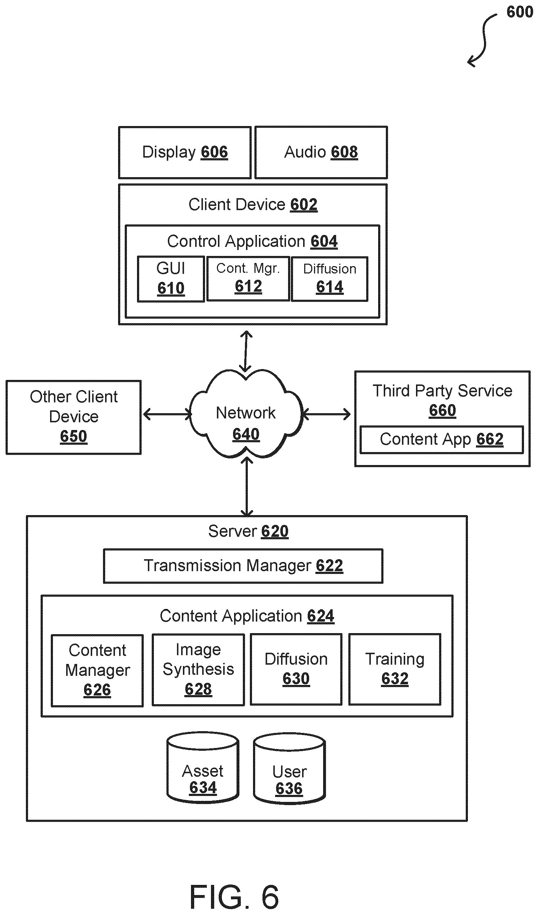

As an example, FIG. 6 illustrates an example network configuration 600 that can be used to provide, generate, modify, encode, process, and/or transmit image data or other such content. In at least one embodiment, a client device 602 can generate or receive data for a session using components of a control application 604 on client device 602 and data stored locally on that client device. In at least one embodiment, a content application 624 executing on a server 620 (e.g., a cloud server or edge server) may initiate a session associated with at least one client device 602, as may utilize a session manager and user data stored in a user database 636, and can cause content such as one or more digital assets (e.g., object representations) from an asset repository 634 to be determined by a content manager 626. A content manager 626 may work with an image synthesis module 628 to generate or synthesize new objects, digital assets, or other such content to be provided for presentation via the client device 602. In at least one embodiment, this image synthesis module 628 can use one or more neural networks, or machine learning models, which can be trained or updated using a training module 632 or system that is on, or in communication with, the server 620. This can include training and/or using a diffusion model 630 to generate content tiles that can be used by an image synthesis module 628, for example, to apply a non-repeating texture to a region of an environment for which image or video data is to be presented via a client device 602. At least a portion of the generated content may be transmitted to the client device 602 using an appropriate transmission manager 622 to send by download, streaming, or another such transmission channel. An encoder may be used to encode and/or compress at least some of this data before transmitting to the client device 602. In at least one embodiment, the client device 602 receiving such content can provide this content to a corresponding control application 604, which may also or alternatively include a graphical user interface 610, content manager 612, and image synthesis or diffusion module 614 for use in providing, synthesizing, modifying, or using content for presentation (or other purposes) on or by the client device 602. A decoder may also be used to decode data received over the network 640 for presentation via client device 602, such as image or video content through a display 606 and audio, such as sounds and music, through at least one audio playback device 608, such as speakers or headphones. In at least one embodiment, at least some of this content may already be stored on, rendered on, or accessible to client device 602 such that transmission over network 640 is not required for at least that portion of content, such as where that content may have been previously downloaded or stored locally on a hard drive or optical disk. In at least one embodiment, a transmission mechanism such as data streaming can be used to transfer this content from server 620, or user database 636, to client device 602. In at least one embodiment, at least a portion of this content can be obtained, enhanced, and/or streamed from another source, such as a third party service 660 or other client device 650, that may also include a content application 662 for generating, enhancing, or providing content. In at least one embodiment, portions of this functionality can be performed using multiple computing devices, or multiple processors within one or more computing devices, such as may include a combination of CPUs and GPUs.

In this example, these client devices can include any appropriate computing devices, as may include a desktop computer, notebook computer, set-top box, streaming device, gaming console, smartphone, tablet computer, VR headset, AR goggles, wearable computer, or a smart television. Each client device can submit a request across at least one wired or wireless network, as may include the Internet, an Ethernet, a local area network (LAN), or a cellular network, among other such options. In this example, these requests can be submitted to an address associated with a cloud provider, who may operate or control one or more electronic resources in a cloud provider environment, such as may include a data center or server farm. In at least one embodiment, the request may be received or processed by at least one edge server, that sits on a network edge and is outside at least one security layer associated with the cloud provider environment. In this way, latency can be reduced by enabling the client devices to interact with servers that are in closer proximity, while also improving security of resources in the cloud provider environment.

In at least one embodiment, such a system can be used for performing graphical rendering operations. In other embodiments, such a system can be used for other purposes, such as for providing image or video content to test or validate autonomous machine applications, or for performing deep learning operations. In at least one embodiment, such a system can be implemented using an edge device, or may incorporate one or more Virtual Machines (VMs). In at least one embodiment, such a system can be implemented at least partially in a data center or at least partially using cloud computing resources.

### DATA CENTER

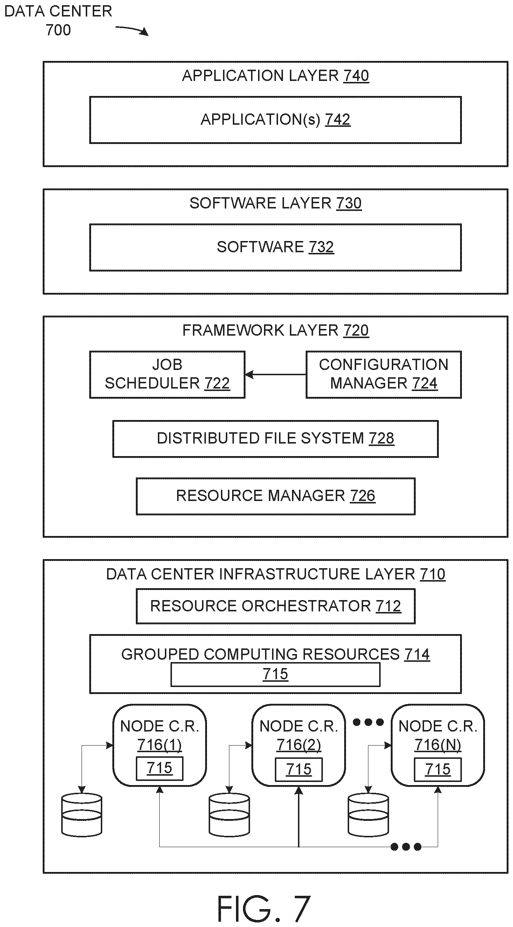

FIG. 7 illustrates an example data center 700, in which at least one embodiment may be used. In at least one embodiment, data center 700 includes a data center infrastructure layer 710, a framework layer 720, a software layer 730, and an application layer 740.

In at least one embodiment, as shown in FIG. 7, data center infrastructure layer 710 may include a resource orchestrator 712, grouped computing resources 714, and node computing resources ("node C.R.s") 716(1)-716(N), where "N" represents any whole, positive integer. In at least one embodiment, node C.R.s 716(1)-716(N) may include, but are not limited to, any number of central processing units ("CPUs") or other processors (including accelerators, field programmable gate arrays (FPGAs), graphics processors, etc.), memory devices (e.g., dynamic read-only memory), storage devices (e.g., solid state or disk drives), network input/output ("NW I/O") devices, network switches, virtual machines ("VMs"), power modules, and cooling modules, etc. In at least one embodiment, one or more node C.R.s from among node C.R.s 716(1)-716(N) may be a server having one or more of above-mentioned computing resources.

In at least one embodiment, grouped computing resources 714 may include separate groupings of node C.R.s housed within one or more racks (not shown), or many racks housed in data centers at various geographical locations (also not shown). Separate groupings of node C.R.s within grouped computing resources 714 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 712 may configure or otherwise control one or more node C.R.s 716(1)-716(N) and/or grouped computing resources 714. In at least one embodiment, resource orchestrator 712 may include a software design infrastructure ("SDI") management entity for data center 700. In at least one embodiment, resource orchestrator may include hardware, software or some combination thereof.

In at least one embodiment, as shown in FIG. 7, framework layer 720 includes a job scheduler 722, a configuration manager 724, a resource manager 726 and a distributed file system 728. In at least one embodiment, framework layer 720 may include a framework to support software 732 of software layer 730 and/or one or more application(s) 742 of application layer 740. In at least one embodiment, software 732 or application(s) 742 may respectively include web-based service software or applications, such as those provided by Amazon Web Services, Google Cloud and Microsoft Azure. In at least one embodiment, framework layer 720 may be, but is not limited to, a type of free and open-source software web application framework such as Apache Spark^{™} (hereinafter "Spark") that may use distributed file system 728 for large-scale data processing (e.g., "big data"). In at least one embodiment, job scheduler 722 may include a Spark driver to facilitate scheduling of workloads supported by various layers of data center 700. In at least one embodiment, configuration manager 724 may be capable of configuring different layers such as software layer 730 and framework layer 720 including Spark and distributed file system 728 for supporting large-scale data processing. In at least one embodiment, resource manager 726 may be capable of managing clustered or grouped computing resources mapped to or allocated for support of distributed file system 728 and job scheduler 722. In at least one embodiment, clustered or grouped computing resources may include grouped computing resource 814 at data center infrastructure layer 710. In at least one embodiment, resource manager 726 may coordinate with resource orchestrator 712 to manage these mapped or allocated computing resources.

In at least one embodiment, software 732 included in software layer 730 may include software used by at least portions of node C.R.s 716(1)-716(N), grouped computing resources 714, and/or distributed file system 728 of framework layer 720. The one or more types of software may include, but are not limited to, Internet web page search software, e-mail virus scan software, database software, and streaming video content software.

In at least one embodiment, application(s) 742 included in application layer 740 may include one or more types of applications used by at least portions of node C.R.s 716(1)-716(N), grouped computing resources 714, and/or distributed file system 728 of framework layer 720. One or more types of applications may include, but are not limited to, any number of a genomics application, a cognitive compute, and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 724, resource manager 726, and resource orchestrator 712 may implement any number and type of self-modifying actions based on any amount and type of data acquired in any technically feasible fashion. In at least one embodiment, self-modifying actions may relieve a data center operator of data center 700 from making possibly bad configuration decisions and possibly avoiding underused and/or poor performing portions of a data center.

In at least one embodiment, data center 700 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 700. In at least one embodiment, trained machine learning models corresponding to one or more neural networks may be used to infer or predict information using resources described above with respect to data center 700 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 715 are used to perform inferencing and/or training operations associated with one or more embodiments. In at least one embodiment, inference and/or training logic 715 may be used in system FIG. 7 for inferencing or predicting operations based, at least in part, on weight parameters calculated using neural network training operations, neural network functions and/or architectures, or neural network use cases described herein.

Such components can be used for platform resiliency.

### COMPUTER SYSTEMS

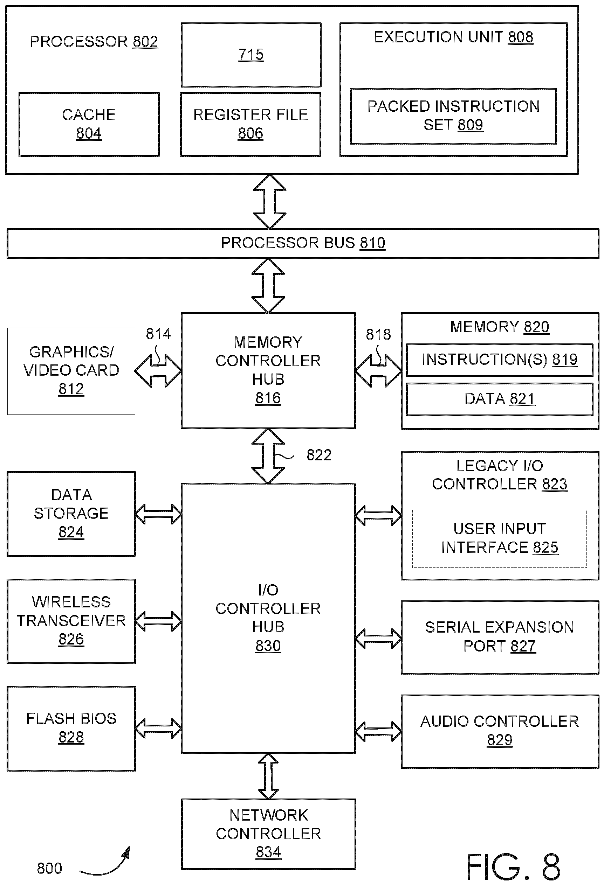

FIG. 8 is a block diagram illustrating an exemplary computer system, which may be a system with interconnected devices and components, a system-on-a-chip (SOC) or some combination thereof 800 formed with a processor that may include execution units to execute an instruction, according to at least one embodiment. In at least one embodiment, computer system 800 may include, without limitation, a component, such as a processor 802 to employ execution units including logic to perform algorithms for process data, in accordance with present disclosure, such as in embodiment described herein. In at least one embodiment, computer system 800 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 800 may execute a version of WINDOWS' operating system available from Microsoft Corporation of Redmond, Wash., although other operating systems (UNIX and Linux for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 800 may include, without limitation, processor 802 that may include, without limitation, one or more execution units 808 to perform machine learning model training and/or inferencing according to techniques described herein. In at least one embodiment, computer system 800 is a single processor desktop or server system, but in another embodiment computer system 800 may be a multiprocessor system. In at least one embodiment, processor 802 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 802 may be coupled to a processor bus 810 that may transmit data signals between processor 802 and other components in computer system 800.

In at least one embodiment, processor 802 may include, without limitation, a Level 1 ("L1") internal cache memory ("cache") 804. In at least one embodiment, processor 802 may have a single internal cache or multiple levels of internal cache. In at least one embodiment, cache memory may reside external to processor 802. Other embodiments may also include a combination of both internal and external caches depending on particular implementation and needs. In at least one embodiment, register file 806 may store different types of data in various registers including, without limitation, integer registers, floating point registers, status registers, and instruction pointer register.

In at least one embodiment, execution unit 808, including, without limitation, logic to perform integer and floating point operations, also resides in processor 802. In at least one embodiment, processor 802 may also include a microcode ("ucode") read only memory ("ROM") that stores microcode for certain macro instructions. In at least one embodiment, execution unit 808 may include logic to handle a packed instruction set 809. In at least one embodiment, by including packed instruction set 809 in an instruction set of a general-purpose processor 802, along with associated circuitry to execute instructions, operations used by many multimedia applications may be performed using packed data in a general-purpose processor 802. In one or more embodiments, many multimedia applications may be accelerated and executed more efficiently by using full width of a processor's data bus for performing operations on packed data, which may eliminate need to transfer smaller units of data across processor's data bus to perform one or more operations one data element at a time.

In at least one embodiment, execution unit 808 may also be used in microcontrollers, embedded processors, graphics devices, DSPs, and other types of logic circuits. In at least one embodiment, computer system 800 may include, without limitation, a memory 820. In at least one embodiment, memory 820 may be implemented as a Dynamic Random Access Memory ("DRAM") device, a Static Random Access Memory ("SRAM") device, flash memory device, or other memory device. In at least one embodiment, memory 820 may store instruction(s) 819 and/or data 821 represented by data signals that may be executed by processor 802.

In at least one embodiment, system logic chip may be coupled to processor bus 810 and memory 820. In at least one embodiment, system logic chip may include, without limitation, a memory controller hub ("MCH") 816, and processor 802 may communicate with MCH 816 via processor bus 810. In at least one embodiment, MCH 816 may provide a high bandwidth memory path 818 to memory 820 for instruction and data storage and for storage of graphics commands, data and textures. In at least one embodiment, MCH 816 may direct data signals between processor 802, memory 820, and other components in computer system 800 and to bridge data signals between processor bus 810, memory 820, and a system I/O 822. In at least one embodiment, system logic chip may provide a graphics port for coupling to a graphics controller. In at least one embodiment, MCH 816 may be coupled to memory 820 through a high bandwidth memory path 818 and graphics/video card 812 may be coupled to MCH 816 through an Accelerated Graphics Port ("AGP") interconnect 814.

In at least one embodiment, computer system 800 may use system I/O 822 that is a proprietary hub interface bus to couple MCH 816 to I/O controller hub ("ICH") 830. In at least one embodiment, ICH 830 may provide direct connections to some I/O devices via a local I/O bus. In at least one embodiment, local I/O bus may include, without limitation, a high-speed I/O bus for connecting peripherals to memory 820, chipset, and processor 802. Examples may include, without limitation, an audio controller 829, a firmware hub ("flash BIOS") 828, a wireless transceiver 826, a data storage 824, a legacy I/O controller 823 containing user input and keyboard interface(s) 825, a serial expansion port 827, such as Universal Serial Bus ("USB"), and a network controller 834. Data storage 824 may comprise a hard disk drive, a floppy disk drive, a CD-ROM device, a flash memory device, or other mass storage device.

In at least one embodiment, FIG. 8 illustrates a system, which includes interconnected hardware devices or "chips", whereas in other embodiments, FIG. 8 may illustrate an exemplary System on a Chip ("SoC"). In at least one embodiment, devices may be interconnected with proprietary interconnects, standardized interconnects (e.g., PCIe) or some combination thereof. In at least one embodiment, one or more components of computer system 800 are interconnected using compute express link (CXL) interconnects.

Inference and/or training logic 715 are used to perform inferencing and/or training operations associated with one or more embodiments. In at least one embodiment, inference and/or training logic 715 may be used in system FIG. 8 for inferencing or predicting operations based, at least in part, on weight parameters calculated using neural network training operations, neural network functions and/or architectures, or neural network use cases described herein.

Such components can be used for platform resiliency.

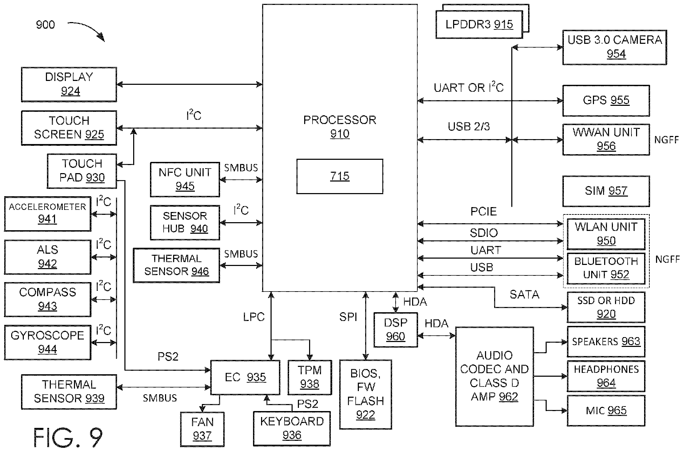

FIG. 9 is a block diagram illustrating an electronic device 900 for utilizing a processor 910, according to at least one embodiment. In at least one embodiment, electronic device 900 may be, for example and without limitation, a notebook, a tower server, a rack server, a blade server, a laptop, a desktop, a tablet, a mobile device, a phone, an embedded computer, or any other suitable electronic device.

In at least one embodiment, electronic device 900 may include, without limitation, processor 910 communicatively coupled to any suitable number or kind of components, peripherals, modules, or devices. In at least one embodiment, processor 910 coupled using a bus or interface, such as a 1°C bus, a System Management Bus ("SMBus"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3), or a Universal Asynchronous Receiver/Transmitter ("UART") bus. In at least one embodiment, FIG. 9 illustrates a system, which includes interconnected hardware devices or "chips", whereas in other embodiments, FIG. 9 may illustrate an exemplary System on a Chip ("SoC"). In at least one embodiment, devices illustrated in FIG. 9 may be interconnected with proprietary interconnects, standardized interconnects (e.g., PCIe) or some combination thereof. In at least one embodiment, one or more components of FIG. 9 are interconnected using compute express link (CXL) interconnects.

In at least one embodiment, FIG 9 may include a display 924, a touch screen 925, a touch pad 930, a Near Field Communications unit ("NFC") 945, a sensor hub 940, a thermal sensor 946, an Express Chipset ("EC") 935, a Trusted Platform Module ("TPM") 938, BIOS/firmware/flash memory ("BIOS, FW Flash") 922, a DSP 960, a drive 920 such as a Solid State Disk ("SSD") or a Hard Disk Drive ("HDD"), a wireless local area network unit ("WLAN") 950, a Bluetooth unit 952, a Wireless Wide Area Network unit ("WWAN") 956, a Global Positioning System (GPS) 955, a camera ("USB 3.0 camera") 954 such as a USB 3.0 camera, and/or a Low Power Double Data Rate ("LPDDR") memory unit ("LPDDR3") 915 implemented in, for example, LPDDR3 standard. These components may each be implemented in any suitable manner.

In at least one embodiment, other components may be communicatively coupled to processor 910 through components discussed above. In at least one embodiment, an accelerometer 941, Ambient Light Sensor ("ALS") 942, compass 943, and a gyroscope 944 may be communicatively coupled to sensor hub 940. In at least one embodiment, thermal sensor 939, a fan 937, a keyboard 936, and a touch pad 930 may be communicatively coupled to EC 935. In at least one embodiment, speakers 963, headphones 964, and microphone ("mic") 965 may be communicatively coupled to an audio unit ("audio codec and class d amp") 962, which may in turn be communicatively coupled to DSP 960. In at least one embodiment, audio unit 964 may include, for example and without limitation, an audio coder/decoder ("codec") and a class D amplifier. In at least one embodiment, SIM card ("SIM") 957 may be communicatively coupled to WWAN unit 956. In at least one embodiment, components such as WLAN unit 950 and Bluetooth unit 952, as well as WWAN unit 956 may be implemented in a Next Generation Form Factor ("NGFF").

Inference and/or training logic 715 are used to perform inferencing and/or training operations associated with one or more embodiments. In at least one embodiment, inference and/or training logic 715 may be used in system FIG. 9 for inferencing or predicting operations based, at least in part, on weight parameters calculated using neural network training operations, neural network functions and/or architectures, or neural network use cases described herein.

Such components can be used for platform resiliency.

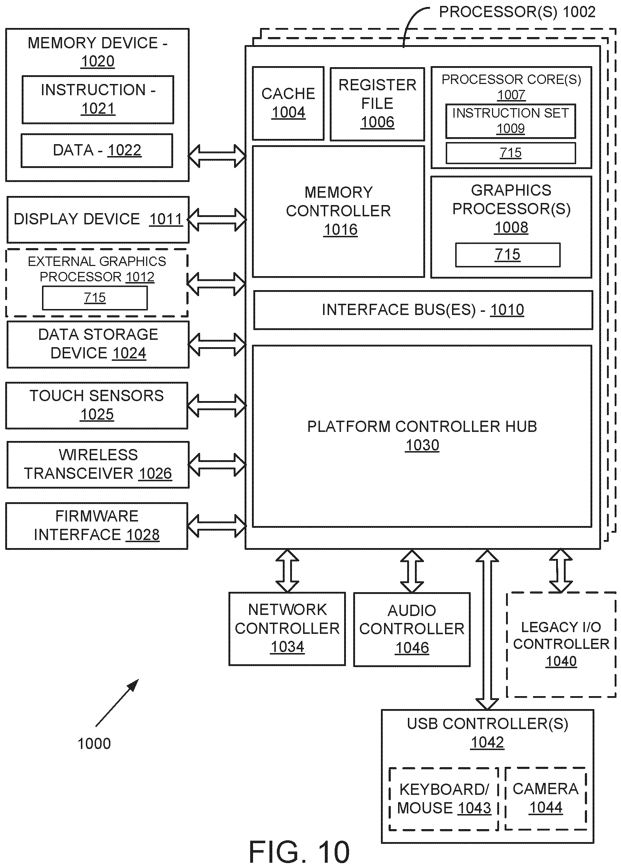

FIG. 10 is a block diagram of a processing system, according to at least one embodiment. In at least one embodiment, system 1000 includes one or more processor(s) 1002 and one or more graphics processor(s) 1008, and may be a single processor desktop system, a multiprocessor workstation system, or a server system having a large number of processor(s) 1002 or processor core(s) 1007. In at least one embodiment, system 1000 is a processing platform incorporated within a system-on-a-chip (SoC) integrated circuit for use in mobile, handheld, or embedded devices.

In at least one embodiment, system 1000 can include, or be incorporated within a server-based gaming platform, a game console, including a game and media console, a mobile gaming console, a handheld game console, or an online game console. In at least one embodiment, system 1000 is a mobile phone, smart phone, tablet computing device or mobile Internet device. In at least one embodiment, processing system 1000 can also include, couple with, or be integrated within a wearable device, such as a smart watch wearable device, smart eyewear device, augmented reality device, or virtual reality device. In at least one embodiment, processing system 1000 is a television or set top box device having one or more processor(s) 1002 and a graphical interface generated by one or more graphics processor(s) 1008.

In at least one embodiment, one or more processor(s) 1002 each include one or more processor core(s) 1007 to process instructions which, when executed, perform operations for system and user software. In at least one embodiment, each of one or more processor core(s) 1007 is configured to process a specific instruction set 1009. In at least one embodiment, instruction set 1009 may facilitate Complex Instruction Set Computing (CISC), Reduced Instruction Set Computing (RISC), or computing via a Very Long Instruction Word (VLIW). In at least one embodiment, processor core(s) 1007 may each process a different instruction set 1009, which may include instructions to facilitate emulation of other instruction sets. In at least one embodiment, processor core(s) 1007 may also include other processing devices, such a Digital Signal Processor (DSP).

In at least one embodiment, processor(s) 1002 includes cache memory 1004. In at least one embodiment, processor(s) 1002 can have a single internal cache or multiple levels of internal cache. In at least one embodiment, cache memory is shared among various components of processor(s) 1002. In at least one embodiment, processor(s) 1002 also uses an external cache (e.g., a Level-3 (L3) cache or Last Level Cache (LLC)) (not shown), which may be shared among processor core(s) 1007 using known cache coherency techniques. In at least one embodiment, register file 1006 is additionally included in processor(s) 1002 which may include different types of registers for storing different types of data (e.g., integer registers, floating point registers, status registers, and an instruction pointer register). In at least one embodiment, register file 1006 may include general-purpose registers or other registers.

In at least one embodiment, one or more processor(s) 1002 are coupled with one or more interface bus(es) 1010 to transmit communication signals such as address, data, or control signals between processor(s) 1002 and other components in system 1000. In at least one embodiment, interface bus(es) 1010, in one embodiment, can be a processor bus, such as a version of a Direct Media Interface (DMI) bus. In at least one embodiment, interface bus(es) 1010 is not limited to a DMI bus, and may include one or more Peripheral Component Interconnect buses (e.g., PCI, PCI Express), memory busses, or other types of interface busses. In at least one embodiment processor(s) 1002 include an integrated memory controller 1016 and a platform controller hub 1030. In at least one embodiment, memory controller 1016 facilitates communication between a memory device and other components of system 1000, while platform controller hub (PCH) 1030 provides connections to I/O devices via a local I/O bus.

In at least one embodiment, memory device 1020 can be a dynamic random access memory (DRAM) device, a static random access memory (SRAM) device, flash memory device, phase-change memory device, or some other memory device having suitable performance to serve as process memory. In at least one embodiment memory device 1020 can operate as system memory for system 1000, to store data 1022 and instruction 1021 for use when one or more processor(s) 1002 executes an application or process. In at least one embodiment, memory controller 1016 also couples with an optional external graphics processor 1012, which may communicate with one or more graphics processor(s) 1008 in processor(s) 1002 to perform graphics and media operations. In at least one embodiment, a display device 1011 can connect to processor(s) 1002. In at least one embodiment display device 1011 can include one or more of an internal display device, as in a mobile electronic device or a laptop device or an external display device attached via a display interface (e.g., DisplayPort, etc.). In at least one embodiment, display device 1011 can include a head mounted display (HMD) such as a stereoscopic display device for use in virtual reality (VR) applications or augmented reality (AR) applications.

In at least one embodiment, platform controller hub 1030 enables peripherals to connect to memory device 1020 and processor(s) 1002 via a high-speed I/O bus. In at least one embodiment, I/O peripherals include, but are not limited to, an audio controller 1046, a network controller 1034, a firmware interface 1028, a wireless transceiver 1026, touch sensors 1025, a data storage device 1024 (e.g., hard disk drive, flash memory, etc.). In at least one embodiment, data storage device 1024 can connect via a storage interface (e.g., SATA) or via a peripheral bus, such as a Peripheral Component Interconnect bus (e.g., PCI, PCI Express). In at least one embodiment, touch sensors 1025 can include touch screen sensors, pressure sensors, or fingerprint sensors. In at least one embodiment, wireless transceiver 1026 can be a Wi-Fi transceiver, a Bluetooth transceiver, or a mobile network transceiver such as a 3G, 4G, or Long Term Evolution (LTE) transceiver. In at least one embodiment, firmware interface 1028 enables communication with system firmware, and can be, for example, a unified extensible firmware interface (UEFI). In at least one embodiment, network controller 1034 can enable a network connection to a wired network. In at least one embodiment, a high-performance network controller (not shown) couples with interface bus(es) 1010. In at least one embodiment, audio controller 1046 is a multi-channel high definition audio controller. In at least one embodiment, system 1000 includes an optional legacy I/O controller 1040 for coupling legacy (e.g., Personal System 2 (PS/2)) devices to system. In at least one embodiment, platform controller hub 1030 can also connect to one or more Universal Serial Bus (USB) controller(s) 1042 connect input devices, such as keyboard and mouse 1043 combinations, a camera 1044, or other USB input devices.

In at least one embodiment, an instance of memory controller 1016 and platform controller hub 1030 may be integrated into a discreet external graphics processor, such as external graphics processor 1012. In at least one embodiment, platform controller hub 1030 and/or memory controller 1016 may be external to one or more processor(s) 1002. For example, in at least one embodiment, system 1000 can include an external memory controller 1016 and platform controller hub 1030, which may be configured as a memory controller hub and peripheral controller hub within a system chipset that is in communication with processor(s) 1002.

Inference and/or training logic 715 are used to perform inferencing and/or training operations associated with one or more embodiments. In at least one embodiment portions or all of inference and/or training logic 715 may be incorporated into graphics processor(s) 1008. For example, in at least one embodiment, training and/or inferencing techniques described herein may use one or more of ALUs embodied in a graphics processor. In at least one embodiment, weight parameters may be stored in on-chip or off-chip memory and/or registers (shown or not shown) that configure ALUs of a graphics processor to perform one or more machine learning algorithms, neural network architectures, use cases, or training techniques described herein.

Such components can be used for platform resiliency.

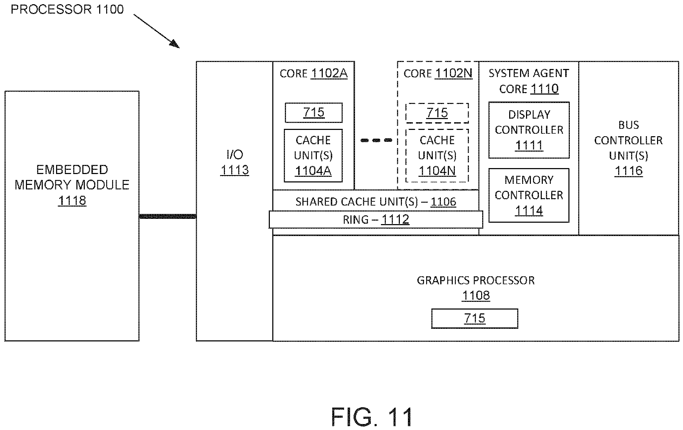

FIG. 11 is a block diagram of a processor 1100 having one or more processor core(s) 1102A-1102N, an integrated memory controller 1114, and an integrated graphics processor 1108, according to at least one embodiment. In at least one embodiment, processor 1100 can include additional cores up to and including additional core 1102N represented by dashed lined boxes. In at least one embodiment, each of processor core(s) 1102A-1102N includes one or more internal cache unit(s) 1104A-1104N. In at least one embodiment, each processor core also has access to one or more shared cached unit(s) 1106.

In at least one embodiment, internal cache unit(s) 1104A-1104N and shared cache unit(s) 1106 represent a cache memory hierarchy within processor 1100. In at least one embodiment, cache unit(s) 1104A-1104N may include at least one level of instruction and data cache within each processor core and one or more levels of shared mid-level cache, such as a Level 2 (L2), Level 3 (L3), Level 4 (L4), or other levels of cache, where a highest level of cache before external memory is classified as an LLC. In at least one embodiment, cache coherency logic maintains coherency between various cache unit(s) 1106 and 1104A-1104N.

In at least one embodiment, processor 1100 may also include a set of one or more bus controller unit(s) 1116 and a system agent core 1110. In at least one embodiment, one or more bus controller unit(s) 1116 manage a set of peripheral buses, such as one or more PCI or PCI express busses. In at least one embodiment, system agent core 1110 provides management functionality for various processor components. In at least one embodiment, system agent core 1110 includes one or more integrated memory controllers 1114 to manage access to various external memory devices (not shown).

In at least one embodiment, one or more of processor core(s) 1102A-1102N include support for simultaneous multi-threading. In at least one embodiment, system agent core 1110 includes components for coordinating and operating processor core(s) 1102A-1102N during multi-threaded processing. In at least one embodiment, system agent core 1110 may additionally include a power control unit (PCU), which includes logic and components to regulate one or more power states of processor core(s) 1102A-1102N and graphics processor 1108.

In at least one embodiment, processor 1100 additionally includes graphics processor 1108 to execute graphics processing operations. In at least one embodiment, graphics processor 1108 couples with shared cache unit(s) 1106, and system agent core 1110, including one or more integrated memory controllers 1114. In at least one embodiment, system agent core 1110 also includes a display controller 1111 to drive graphics processor output to one or more coupled displays. In at least one embodiment, display controller 1111 may also be a separate module coupled with graphics processor 1108 via at least one interconnect, or may be integrated within graphics processor 1108.

In at least one embodiment, a ring based interconnect unit 1112 is used to couple internal components of processor 1100. In at least one embodiment, an alternative interconnect unit may be used, such as a point-to-point interconnect, a switched interconnect, or other techniques. In at least one embodiment, graphics processor 1108 couples with ring based interconnect unit 1112 via an I/O link 1113.

In at least one embodiment, I/O link 1113 represents at least one of multiple varieties of I/O interconnects, including an on package I/O interconnect which facilitates communication between various processor components and a high-performance embedded memory module 1118, such as an eDRAM module. In at least one embodiment, each of processor core(s) 1102A-1102N and graphics processor 1108 use embedded memory modules 1118 as a shared Last Level Cache.

In at least one embodiment, processor core(s) 1102A-1102N are homogenous cores executing a common instruction set architecture. In at least one embodiment, processor core(s) 1102A-1102N are heterogeneous in terms of instruction set architecture (ISA), where one or more of processor core(s) 1102A-1102N execute a common instruction set, while one or more other cores of processor core(s) 1102A-1102N executes a subset of a common instruction set or a different instruction set. In at least one embodiment, processor core(s) 1102A-1102N are heterogeneous in terms of microarchitecture, where one or more cores having a relatively higher power consumption couple with one or more power cores having a lower power consumption. In at least one embodiment, processor 1100 can be implemented on one or more chips or as an SoC integrated circuit.

Inference and/or training logic 715 are used to perform inferencing and/or training operations associated with one or more embodiments. In at least one embodiment portions or all of inference and/or training logic 715 may be incorporated into processor 1100. For example, in at least one embodiment, training and/or inferencing techniques described herein may use one or more of ALUs embodied in graphics processor 1108, processor core(s) 1102A-1102N, or other components in FIG. 11. In at least one embodiment, weight parameters may be stored in on-chip or off-chip memory and/or registers (shown or not shown) that configure ALUs of graphics processor 1100/1108 to perform one or more machine learning algorithms, neural network architectures, use cases, or training techniques described herein.

Such components can be used for platform resiliency.

Various embodiments can be described by the following clauses:
1. A processor comprising:
   one or more circuits to:
   identify a component installed within a platform;
   determine, based on one or more component properties, a capability classification for the component;
   generate an index entry for the component, including at least an identifier and the capability classification;
   determine the capability classification is less than fully sufficient;
   populate one or more supplemental update entries for the component; and
   store the index entry and one or more supplemental update entries for the component.
2. The processor of clause 1, wherein the capability classification includes at least one of partially sufficient, supplicant, fully dependent, or virtual.
3. The processor of clause 1, wherein the one or more processing units are further to:
   receive a firmware update request for the component;
   determine, using the index entry, the capability classification;
   determine, based at least on the capability classification, that the firmware update will use the one or more supplemental update entries; and
   cause the firmware update to execute using the one or more supplemental update entries.
4. The processor of clause 1, wherein the capability classification is associated with an on-component capability to perform at least one of a protection operation, a detection operation, or a recovery operation.
5. The processor of clause 1, wherein the one or more circuits are further to:
   receive a firmware update request for the component;
   determine the capability classification corresponds to a partially sufficient component; and
   retrieve update information from one or more off-component memory locations.
6. The processor of clause 1, wherein the one or more circuits are further to:
   receive a firmware update request for the component;
   determine the capability classification corresponds to a supplicant component;
   validate the firmware update using one or more off-component services; and
   retrieve update information from one or more off-component memory locations.
7. The processor of clause 1, wherein the one or more circuits are further to:
   receive, from an authority associated with the platform, updated parameters for the component;
   authenticate the authority; and
   update the index entry based on the updated parameters for the component.
8. The processor of clause 7, wherein the authority is at least one of a manufacturer of the platform or an owner of the platform.
9. The processor of clause 1, wherein the processor is comprised in at least one of:
   a system for performing simulation operations;
   a system for performing simulation operations to test or validate autonomous machine applications;
   a system for performing digital twin operations;
   a system for performing light transport simulation;
   a system for rendering graphical output;
   a system for performing deep learning operations;
   a system implemented using an edge device;
   a system for generating or presenting virtual reality (VR) content;
   a system for generating or presenting augmented reality (AR) content;
   a system for generating or presenting mixed reality (MR) content;
   a system incorporating one or more Virtual Machines (VMs);
   a system for performing operations for a conversational AI application;
   a system for performing operations for a generative AI application;
   a system for performing operations using a language model;
   a system for performing one or more generative content operations using a large language model (LLM);
   a system implemented at least partially in a data center;
   a system for performing hardware testing using simulation;
   a system for performing one or more generative content operations using a language model;
   a system for synthetic data generation;
   a collaborative content creation platform for 3D assets; or
   a system implemented at least partially using cloud computing resources.
10. A computer-implemented method, comprising:
   receiving a firmware (FW) update request associated with a component forming at least part of a platform;
   determining one or more capabilities associated with the component;
   determining, based at least on the one or more capabilities, supplemental update information for the platform component;
   obtaining, based at least on an identifier associated with the component, the supplemental update information; and
   causing the FW update to be installed for the component using, at least, the supplemental update information.
11. The computer-implemented method of clause 10, further comprising:
   receiving a second FW update request for a second component forming at least part of the platform;
   determining one or more second capabilities associated with the second component; and
   determining the one or more second capabilities define the second component as a fully sufficient component; and
   causing the FW update to be installed for the component.
12. The computer-implemented method of clause 10, wherein the one or more capabilities are associated with at least a protection operation, a detection operation, or a recovery operation.
13. The computer-implemented method of clause 10, further comprising:
   defining a capability level for the component, the capability level including at least one of fully sufficient, partially sufficient, supplicant, fully dependent, and virtual.
14. The computer-implemented method of clause 10, further comprising:
   receiving, from an authority associated with the platform, updated parameters for the platform component;
   authenticating the authority; and
   updating an index entry corresponding to the platform component based on the updated parameters for the component.
15. The computer-implemented method of clause 10, further comprising:
   identifying a new component associated with the platform;
   receiving validation information associated with the new component; and
   generating an index entry for the new component, including at least an identifier and a new component capability classification.
16. A system, comprising:
   one or more processing units to determine a component capability level responsive to receiving an update request for a component and to obtain, based at least on the component capability level and index information for the component, supplemental update information to perform the update.
17. The system of clause 16, wherein the component capability level corresponds to an ability of the component to execute at least one of a protection operation, a detection operation, or a recovery operation using on-component resources.
18. The system of clause 16, wherein the component capability level corresponds to one of fully sufficient, partially sufficient, supplicant, fully dependent, and virtual.
19. The system of clause 16, wherein the index information is populated by a platform manufacturer and is rooted within a resilience engine of a platform including the component.
20. The system of clause 16, wherein supplemental update information includes at least one of a validation key, a measurement operation, or an off-component storage location.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset," unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B, and at least one of C each to be present. In addition, unless otherwise noted or contradicted by context, term "plurality" indicates a state of being plural (e.g., "a plurality of items" indicates multiple items). A plurality is at least two items, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media, in at least one embodiment, comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. Obtaining, acquiring, receiving, or inputting analog and digital data can be accomplished in a variety of ways such as by receiving data as a parameter of a function call or a call to an application programming interface. In some implementations, process of obtaining, acquiring, receiving, or inputting analog or digital data can be accomplished by transferring data via a serial or parallel interface. In another implementation, process of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, process of providing, outputting, transmitting, sending, or presenting analog or digital data can be accomplished by transferring data as an input or output parameter of a function call, a parameter of an application programming interface or interprocess communication mechanism.

Although discussion above sets forth example implementations of described techniques, other architectures may be used to implement described functionality, and are intended to be within scope of this disclosure. Furthermore, although specific distributions of responsibilities are defined above for purposes of discussion, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A processor comprising:
one or more circuits to:
identify a component installed within a platform;
determine, based on one or more component properties, a capability classification for the component;
generate an index entry for the component, including at least an identifier and the capability classification;
determine the capability classification is less than fully sufficient;
populate one or more supplemental update entries for the component; and
store the index entry and one or more supplemental update entries for the component.

2. The processor of claim 1, wherein the capability classification includes at least one of partially sufficient, supplicant, fully dependent, or virtual, wherein the capability classification is associated with an on-component capability to perform at least one of a protection operation, a detection operation, or a recovery operation.

3. The processor of claim 1 or 2, wherein the one or more processing units are further to:
receive a firmware update request for the component;
determine, using the index entry, the capability classification;
determine, based at least on the capability classification, that the firmware update will use the one or more supplemental update entries; and
cause the firmware update to execute using the one or more supplemental update entries.

4. The processor of claim 1, wherein the one or more circuits are further to:
receive a firmware update request for the component;
determine the capability classification corresponds to a partially sufficient component; and
retrieve update information from one or more off-component memory locations.

5. The processor of claim 1, wherein the one or more circuits are further to:
receive a firmware update request for the component;
determine the capability classification corresponds to a supplicant component;
validate the firmware update using one or more off-component services; and
retrieve update information from one or more off-component memory locations.

6. The processor of any preceding claim, wherein the one or more circuits are further to:
receive, from an authority associated with the platform, updated parameters for the component;
authenticate the authority; and
update the index entry based on the updated parameters for the component, wherein the authority is at least one of a manufacturer of the platform or an owner of the platform.

7. The processor of any preceding claim, wherein the processor is comprised in at least one of:
a system for performing simulation operations;
a system for performing simulation operations to test or validate autonomous machine applications;
a system for performing digital twin operations;
a system for performing light transport simulation;
a system for rendering graphical output;
a system for performing deep learning operations;
a system implemented using an edge device;
a system for generating or presenting virtual reality (VR) content;
a system for generating or presenting augmented reality (AR) content;
a system for generating or presenting mixed reality (MR) content;
a system incorporating one or more Virtual Machines (VMs);
a system for performing operations for a conversational AI application;
a system for performing operations for a generative AI application;
a system for performing operations using a language model;
a system for performing one or more generative content operations using a large language model (LLM);
a system implemented at least partially in a data center;
a system for performing hardware testing using simulation;
a system for performing one or more generative content operations using a language model;
a system for synthetic data generation;
a collaborative content creation platform for 3D assets; or
a system implemented at least partially using cloud computing resources.

8. A computer-implemented method, comprising:
receiving a firmware (FW) update request associated with a component forming at least part of a platform;
determining one or more capabilities associated with the component;
determining, based at least on the one or more capabilities, supplemental update information for the platform component;
obtaining, based at least on an identifier associated with the component, the supplemental update information; and
causing the FW update to be installed for the component using, at least, the supplemental update information.

9. The computer-implemented method of claim 8, further comprising:
receiving a second FW update request for a second component forming at least part of the platform;
determining one or more second capabilities associated with the second component; and
determining the one or more second capabilities define the second component as a fully sufficient component; and
causing the FW update to be installed for the component.

10. The computer-implemented method of claim 8 or 9, further comprising:
receiving, from an authority associated with the platform, updated parameters for the platform component;
authenticating the authority; and
updating an index entry corresponding to the platform component based on the updated parameters for the component.

11. The computer-implemented method of claim 8, 9, or 10, further comprising:
identifying a new component associated with the platform;
receiving validation information associated with the new component; and
generating an index entry for the new component, including at least an identifier and a new component capability classification.

12. A system, comprising:
one or more processing units to determine a component capability level responsive to receiving an update request for a component and to obtain, based at least on the component capability level and index information for the component, supplemental update information to perform the update.

13. The system of claim 12, wherein the component capability level corresponds to an ability of the component to execute at least one of a protection operation, a detection operation, or a recovery operation using on-component resources, wherein the component capability level corresponds to one of fully sufficient, partially sufficient, supplicant, fully dependent, and virtual.

14. The system of claim 12 or 13, wherein the index information is populated by a platform manufacturer and is rooted within a resilience engine of a platform including the component.

15. The system of claim 12, 13, or 14, wherein supplemental update information includes at least one of a validation key, a measurement operation, or an off-component storage location.
